# EUROPEAN PATENT SPECIFICATION

(11) **EP 4 250 861 B1**
(45) Date of publication and mention of the grant of the patent: **23.07.2025**
(21) Application number: 22200044.0
(22) Date of filing: 06.10.2022
(51) Int. Cl.: H04W 76/14, H04W 72/25, H04W 76/28, H04W 92/18, H04W 88/04

(54) **DRX IN SIDELINK COMMUNICATION RELAY**
DRX IN SIDELINK-KOMMUNIKATIONSRELAIS
DRX DANS DES RELAIS DE COMMUNICATION PAR LIAISON LATÉRALE

(30) Priority: 24.03.2022 KR 20220036834
(43) Date of publication of application: 27.09.2023
(73) Proprietor: LG Electronics, Inc., Yeongdeungpo-gu Seoul 07336 (KR)
(72) Inventor: BACK, Seoyoung, 06772 Seoul (KR); LEE, Seungmin, 06772 Seoul (KR); PARK, Giwon, 06772 Seoul (KR)
(74) Representative: Frenkel, Matthias Alexander

(56) References cited:
- EP-A1- 4 080 938
- EP-A1- 4 084 513
- WO-A1-2021/147597
- WO-A1-2021/190442
- WO-A1-2021/232177

## Description

### BACKGROUND OF THE DISCLOSURE

### Field of the Disclosure

The present disclosure relates to a sidelink communication method in a wireless communication system and, more particularly, to sidelink discontinuous reception (DRX) configuration during a sidelink relay operation.

### Discussion of the Related Art

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G

Finally, logistics and freight tracking are important use cases for mobile communications that enable the tracking of inventory and packages wherever they are by using location-based information systems. The logistics and freight tracking use cases typically require lower data rates but need wide coverage and reliable location information.

A wireless communication system is a multiple access system that supports communication of multiple users by sharing available system resources (a bandwidth, transmission power, etc.). Examples of multiple access systems include a CDMA system, an FDMA system, a TDMA system, an OFDMA system, an SC-FDMA system, and an MC-FDMA system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

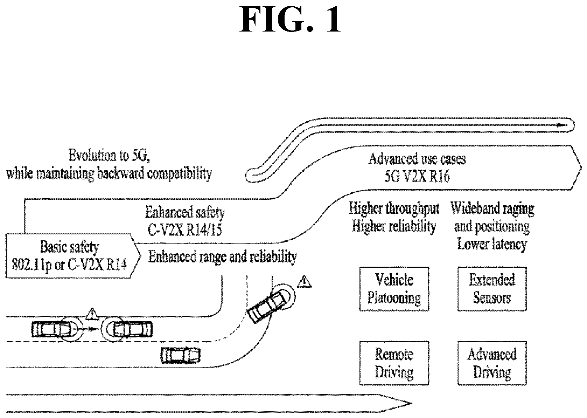

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

In 3GPP standardization related to SL communication as described above, a DRX configuration is under discussion. Specifically, alignment between an SL DRX configuration and a DRX configuration of a Uu interface is being discussed in relation to a DRX configuration method. In the case of SL unicast communication, discussion is focusing on a transmission UE. That is, a reception UE provides assistance information for determining a DRX configuration, and the transmission UE is intended to autonomously determines the DRX configuration or report the assistance information to a BS according to an operation mode.

Here, in consideration of a characteristic of a relay UE in a state in which a remote UE having difficulty in direct connection with the BS is connected to the BS through the relay UE, it is necessary to more precisely control the relationship between DRX of the Uu interface and SL DRX. WO 2021/147597 A1, WO 2021/232177 A1 and WO 2021/190442 A1 form the related prior art.

### SUMMARY

The invention is carried out according to the appended independent claims. Optional features of the invention are carried out according to the dependent claims.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a diagram illustrating V2X communication based on pre-NR RAT and V2X communication based on NR in comparison.
FIG. 2 illustrates the structure of an NR system according to an embodiment of the present disclosure.
FIG. 3 illustrates functional split between the NG-RAN and the 5GC according to an embodiment of the present disclosure.
FIG. 4 illustrates a radio protocol architecture according to an embodiment of the present disclosure.
FIG. 5 illustrates a radio protocol architecture for sidelink communication according to an embodiment of the present disclosure.
FIG. 6 illustrates a synchronization source or a synchronization reference of V2X according to an embodiment of the present disclosure.
FIGS. 7 and 8 are diagrams illustrating a sidelink DRX configuration method in 3GPP standardization constituting the premise of the present disclosure.
FIG. 9 is a diagram illustrating an operating method of a U2N relay UE for a sidelink DRX configuration according to an embodiment of the present disclosure.
FIG. 10 illustrates the method according to the embodiment described with reference to FIG. 9, which is applied to the operation method of FIG. 8.
FIG. 11 is a diagram illustrating a method of performing an RRC configuration according to the embodiment with reference to FIG. 9.
FIG. 12 illustrates a communication system 1 applied to the present disclosure.
FIG. 13 illustrates wireless devices applicable to the present disclosure.
FIG. 14 illustrates a vehicle or an autonomous driving vehicle applied to the present disclosure.
FIG. 15 illustrates a vehicle applied to the present disclosure.
FIG. 16 illustrates a robot applied to the present disclosure.
FIG. 17 illustrates an AI device applied to the present disclosure. In the following, fig. 8-9 and their description is according to the claimed invention. The remaining description does not or does not fully correspond to the claimed invention but is useful for understanding the invention.

### DETAILED DESCRIPTION

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

A successor to LTE-A, 5th generation (5G) new radio access technology (NR) is a new clean-state mobile communication system characterized by high performance, low latency, and high availability. 5G NR may use all available spectral resources including a low frequency band below 1GHz, an intermediate frequency band between 1GHz and 10GHz, and a high frequency (millimeter) band of 24GHz or above.

While the following description is given mainly in the context of LTE-A or 5G NR for the clarity of description, the technical idea of an embodiment of the present disclosure is not limited thereto.

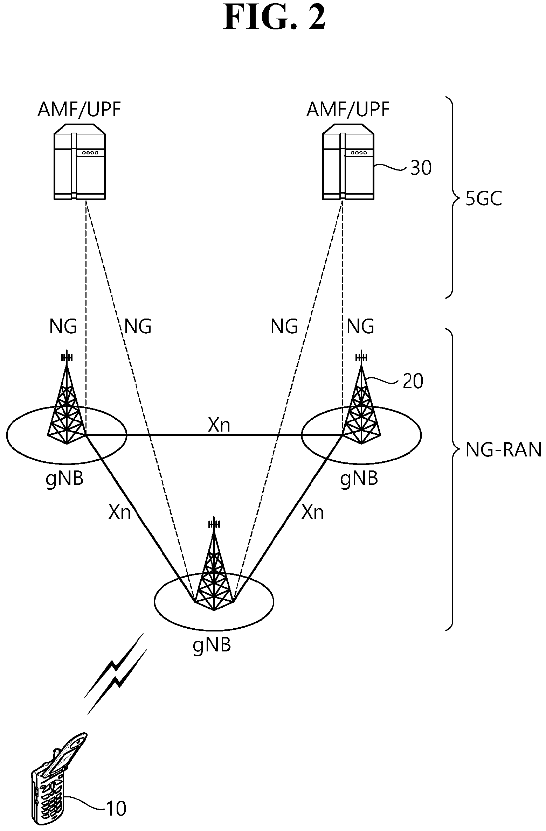

FIG. 2 illustrates the structure of an NR system according to an embodiment of the present disclosure.

Referring to FIG. 2, a next generation radio access network (NG-RAN) may include a next generation Node B (gNB) and/or an eNB, which provides user-plane and control-plane protocol termination to a UE.

In FIG. 2, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

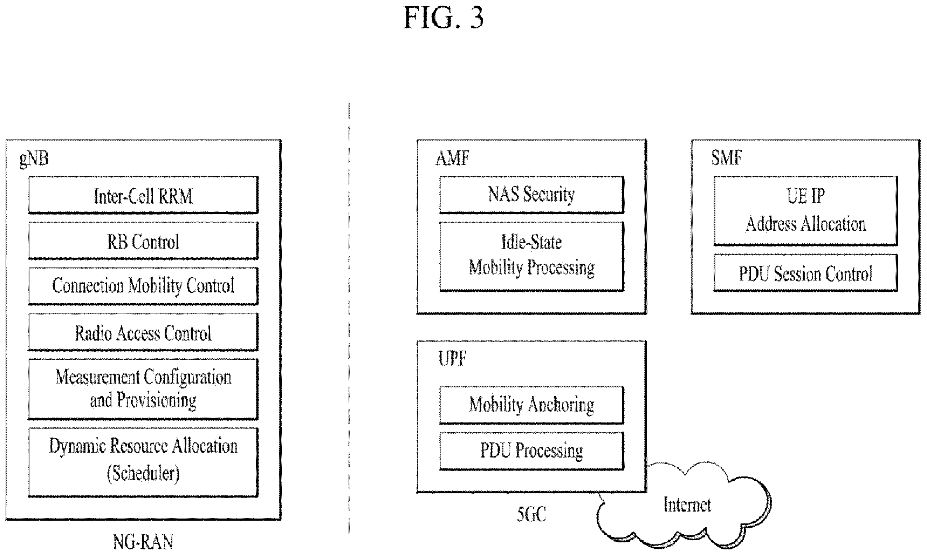

FIG. 3 illustrates functional split between the NG-RAN and the 5GC according to an embodiment of the present disclosure.

Referring to FIG. 3, a gNB may provide functions including inter-cell radio resource management (RRM), radio admission control, measurement configuration and provision, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including UE Internet protocol (IP) address allocation and PDU session control.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

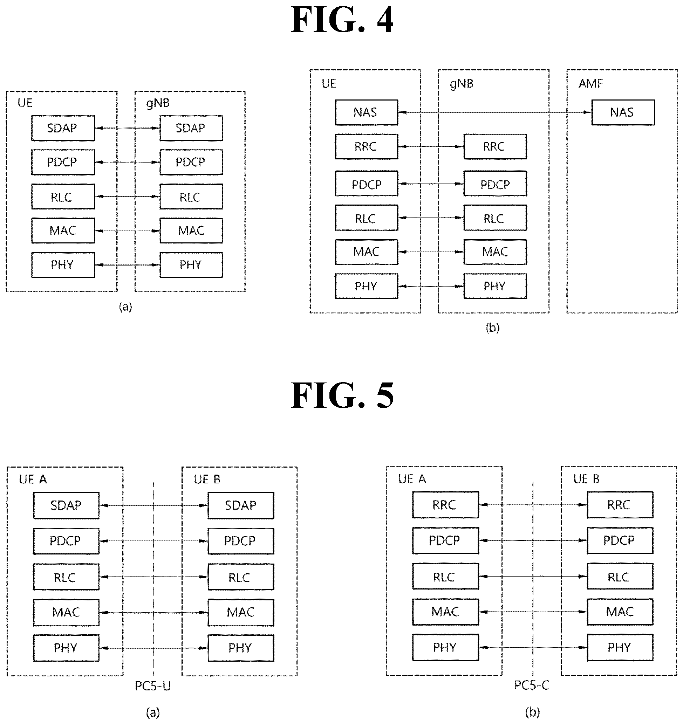

FIG. 4 illustrates a radio protocol architecture according to an embodiment of the present disclosure.

The embodiment of FIG. 4 may be combined with various embodiments of the present disclosure. Specifically, FIG. 4(a) illustrates a radio protocal architecture for a user plane, and FIG. 4(b) illustrates a radio protocal architecture for a control plane. The user plane is a protocol stack for user data transmission, and the control plane is a protocl stack for control signal transmission.

Referring to FIG. 4, the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the UE and the network.

The user-plane functions of the PDCP layer include user data transmission, header compression, and ciphering. The control-plane functions of the PDCP layer include control-plane data transmission and ciphering/integrity protection.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC _INACTIVE state is additionally defined. A UE in the RRC _INACTIVE state may maintain a connection to a core network, while releasing a connection from an eNB.

DL transport channels carrying data from the network to the UE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

Now, a description will be given of sidelink (SL) communication.

FIG. 5 illustrates a radio protocol architecture for SL communication according to an embodiment of the present disclosure. Specifically, FIG. 5(a) illustrates a user-plane protocol stack in LTE, and FIG. 5(b) illustrates a control-plane protocol stack in LTE.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

Hereinafter, synchronization acquisition by an SL UE will be described.

In TDMA and FDMA systems, accurate time and frequency synchronization is essential. Inaccurate time and frequency synchronization may lead to degradation of system performance due to inter-symbol interference (ISI) and inter-carrier interference (ICI). The same is true for V2X. For time/frequency synchronization in V2X, a sidelink synchronization signal (SLSS) may be used in the PHY layer, and master information block-sidelink-V2X (MIB-SL-V2X) may be used in the RLC layer.

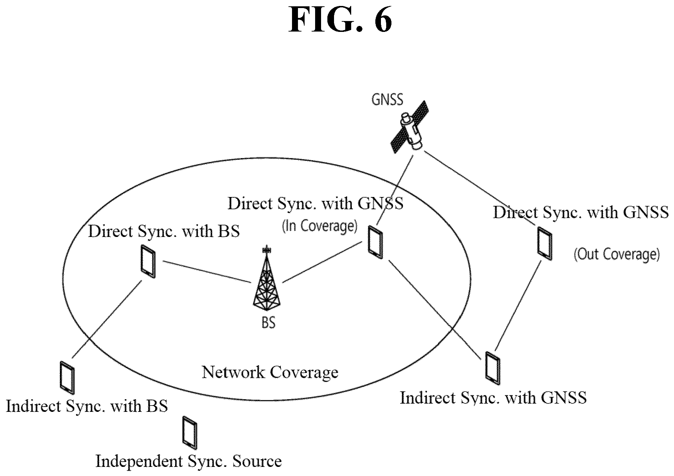

FIG. 6 illustrates a synchronization source or a synchronization reference of V2X according to an embodiment of the present disclosure. The embodiment of FIG. 6 may be combined with various embodiments of the present disclosure.

Referring to FIG. 6, in V2X, a UE may be directly synchronized with a global navigation satellite system (GNSS) or may be indirectly synchronized with the GNSS through a UE (in network coverage or out of network coverage) that is directly synchronized with the GNSS. If the GNSS is configured as a synchronization source, a UE may calculate a direct frame number (DFN) and a subframe number using coordinated universal time (UTC) and a (pre)configured DFN offset.

Alternatively, a UE may be directly synchronized with a BS or may be synchronized with another UE that is synchronized in time/frequency with the BS. For example, the BS may be an eNB or a gNB. For example, when a UE is in network coverage, the UE may receive synchronization information provided by the BS and may be directly synchronized with the BS. Next, the UE may provide the synchronization information to another adjacent UE. If a timing of the BS is configured as a synchronization reference, the UE may follow a cell associated with a corresponding frequency (when the UE is in cell coverage in frequency) or a primary cell or a serving cell (when the UE is out of cell coverage in frequency), for synchronization and DL measurement.

The BS (e.g., serving cell) may provide a synchronization configuration for a carrier used for V2X/SL communication. In this case, the UE may conform to the synchronization configuration received from the BS. If the UE fails to detect any cell in the carrier used for V2X/SL communication and fails to receive the synchronization configuration from the serving cell, the UE may conform to a preset synchronization configuration.

Alternatively, the UE may be synchronized with another UE that has failed to directly or indirectly acquire the synchronization information from the BS or the GNSS. A synchronization source and a preference may be preconfigured for the UE. Alternatively, the synchronization source and the preference may be configured through a control message provided by the BS.

An SL synchronization source may be associated with a synchronization priority level. For example, the relationship between synchronization sources and synchronization priority levels may be defined as shown in Table 1 or Table 2. Table 1 or Table 2 are purely exemplary and the relationship between the synchronization sources and the synchronization priority levels may be defined in various manners.

**[Table 1]**

| Priority Level | GNSS-based Synchronization | eNB/gNB-based Synchronization |
|---|---|---|
| P0 | GNSS | eNB/gNB |
| P1 | All UEs directly synchronized with GNSS | All UEs directly synchronized with eNB/gNB |
| P2 | All UEs indirectly synchronized with GNSS | All UEs indirectly synchronized with eNB/gNB |
| P3 | All other UEs | GNSS |
| P4 | N/A | All UEs directly synchronized with GNSS |
| P5 | N/A | All UEs indirectly synchronized with GNSS |
| P6 | N/A | All other UEs |

**[Table 2]**

| Priority level | GNSS-based synchronization | eNB/gNB-based synchronization |
|---|---|---|
| P0 | GNSS | eNB/gNB |
| P1 | All UEs synchronized directly with GNSS | All UEs synchronized directly with eNB/gNB |
| P2 | All UEs synchronized indirectly with GNSS | All UEs synchronized indirectly with eNB/gNB |
| P3 | eNB/gNB | GNSS |
| P4 | All UEs synchronized directly with eNB/gNB | All UEs synchronized directly with GNSS |
| P5 | All UEs synchronized indirectly with eNB/gNB | All UEs synchronized indirectly with GNSS |
| P6 | Remaining UE(s) with lower priority | Remaining UE(s) with lower priority |

In Table 1 or Table 2, P0 may represent the highest priority, and P6 may represent the lowest priority. In Table 1 or Table 2, the BS may include at least one of a gNB or an eNB.

Whether to use GNSS-based synchronization or eNB/gNB-based synchronization may be (pre)configured. In a single-carrier operation, the UE may derive a transmission timing thereof from an available synchronization reference having the highest priority.

For example, the UE may (re)select a synchronization reference and obtain synchronization from the synchronization reference. Based on the obtained synchronization, the UE may perform SL communication (e.g., PSCCH/PSSCH transmission/reception, physical sidelink feedback channel (PSFCH) transmission/reception, S-SSB transmission/reception, reference signal transmission/reception, etc.).

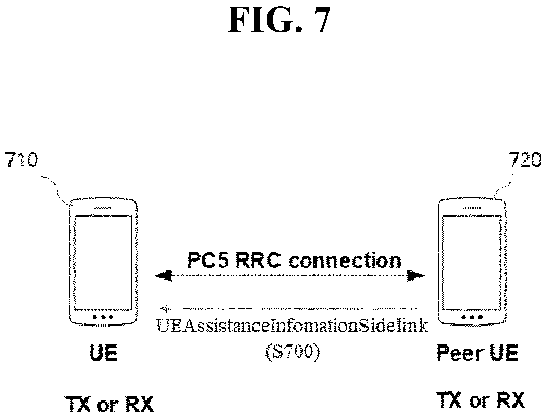

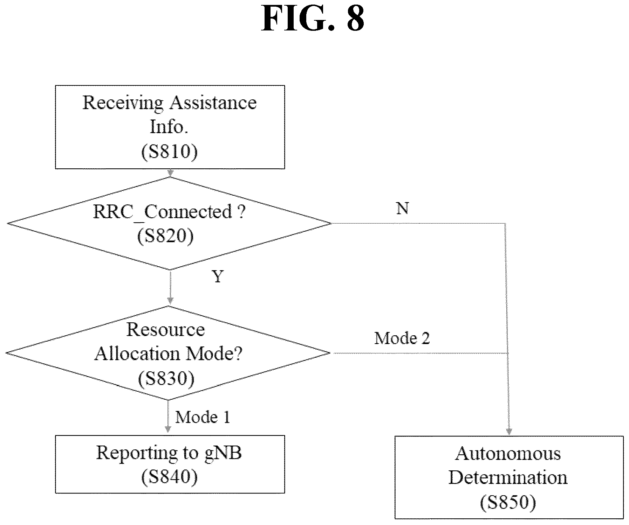

FIGS. 7 and 8 are diagrams illustrating an SL DRX configuration method in 3GPP standardization constituting the premise of the present disclosure.

As illustrated in FIG. 7, SL may be configured through PC5 RRC connection between a transmission (Tx) UE and a reception (Rx) UE. In FIG. 7, when a first UE 710 operates as the Tx UE, a second UE 720 operates as the Rx UE and, when the first UE 710 operates as the Rx UE, the second UE 720 operates as the Tx UE.

In either case, the second UE 720 may be referred to as a peer UE from the viewpoint of the first UE 710.

The DRX configuration method will now be described under the assumption that the first UE 710 operates as the Tx UE. Alignment between a Uu DRX configuration and an SL DRX configuration may be based on a UE in an RRC connection state among the Tx UE and Rx UE. As illustrated in FIG. 7, the first UE 710 operating as the Tx UE may receive assistance information (e.g., UEAssistanceInformationSL of 3GPP) for determining the SL DRX configuration from the second UE 720, which is a peer UE operating as the Rx UE. The assistance information is for the SL DRX configuration during unicast communication between UEs and may be considered as information about a preferred SL DRX configuration from the viewpoint of the Rx UE.

FIG. 8 illustrates an operation method of the first UE 710 upon receiving such assistance information according to the invention.

Upon receiving the assistance information as described above (S810), the first UE performs a different operation depending on whether the first UE operates in an RRC_Connected state (S820). When the first UE operates not in the RRC_Connected state and but in an RRC_IDLE or RRC _INACTIVE state, the first UE autonomously determines the SL DRX configuration based on the assistance information of the second UE (S850).

If the first UE operates in the RRC_Connected state, the operation of the first UE 710 is differently determined according to an SL resource allocation mode (S830). The SL resource allocation mode is divided into mode 1 and mode 2. In mode 1, a gNB operates by allocating resources to UEs within coverage and, in mode 2, UEs operate by autonomously determining resources.

When the first UE operates in mode 1, the first UE may report the assistance information of the second UE to the gNB (S840). The gNB may provide SL DRX for the second UE and, if necessary, Uu/SL DRX configuration information for the first UE, based on the reported assistance information.

When the first UE operates in mode 2, the first UE may autonomously determine the SL DRX configuration of the second UE based on the assistance information of the second UE, instead of providing the received assistance information of the second UE to the gNB, and provide the SL DRX configuration of the second UE to the second UE.

However, more delicate alignment may be needed between Uu DRX and SL DRX when a UE operates as a relay UE that relays connection between a remote UE and a gNB, unlike the case of regulating the operation method according to the above-described embodiment with reference to FIGS. 7 and 8. This is because, if a DRX configuration of an on-duration between Uu DRX and SL DRX is severely misaligned, it may be difficult to satisfy QoS of data transmitted to the remote UE.

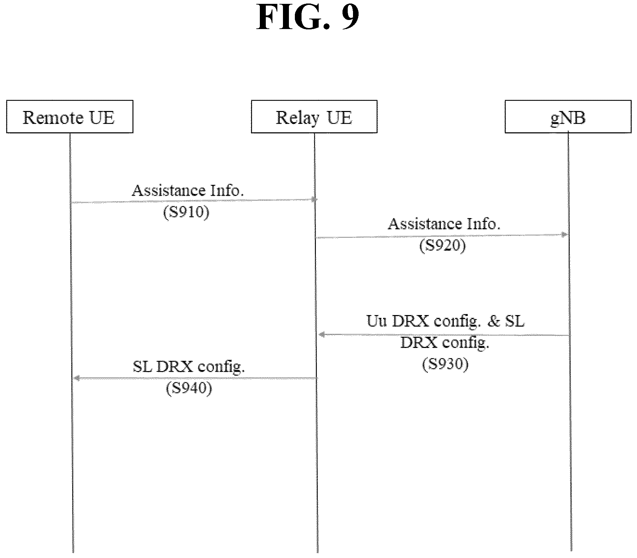

FIG. 9 is a diagram illustrating an operating method of a U2N relay UE for an SL DRX configuration according to the invention.

A UE-to-network (U2N) relay means that a U2N relay UE performs a relay operation between a remote UE and a gNB in an environment in which it is difficult for the remote UE to be directly connected to the gNB. In an upper portion of FIG. 9, the remote UE, the relay UE, and the gNB are sequentially indicated.

When the remote UE operates as an Rx UE, the remote UE transmits in the claimed invention above-described assistance information to the relay UE (S910). Thus, the relay UE that has received the assistance information is regarded as operating as a Tx UE as described above with reference to FIG. 7.

In the claimed invention, the relay UE reports the assistance information received from the remote UE to the gNB regardless of a resource allocation mode thereof (S920). That is, even when the relay UE operates in mode 2, the relay UE transmits the SL assistance information received from the remote UE to the gNB. The SL assistance information may be, for example, sidelink UE information (SUI) or UE assistance information (UAI) of 3GPP. As will be described later, the above information may be transmitted by being combined with various procedures using a characteristic of being reported to the gNB regardless of the operation mode of the relay UE.

When the relay UE receives the assistance information received from the remote UE, the gNB configures the SL DRX configuration for the remote UE with respect to the relay UE (S930). That is, the relay UE may not configure SL DRX for the remote UE even when operating in mode 2.

Specifically, the gNB configures in the claimed invention Uu DRX for the relay UE for a DL operation and indicates an SL DRX configuration value for the remote UE (S930). In addition, the gNB may configure, for the remote UE, the SL DRX value transparent to the relay UE. That is, the gNB may configure the SL DRX configuration for each of the relay UE and the remote UE.

As another example, the gNB may configure, only for the relay UE, Uu DRX and SL DRX for the remote UE. Upon receiving Uu DRX and SL DRX, the relay UE may transmit the SL DRX value to the remote UE (S940).

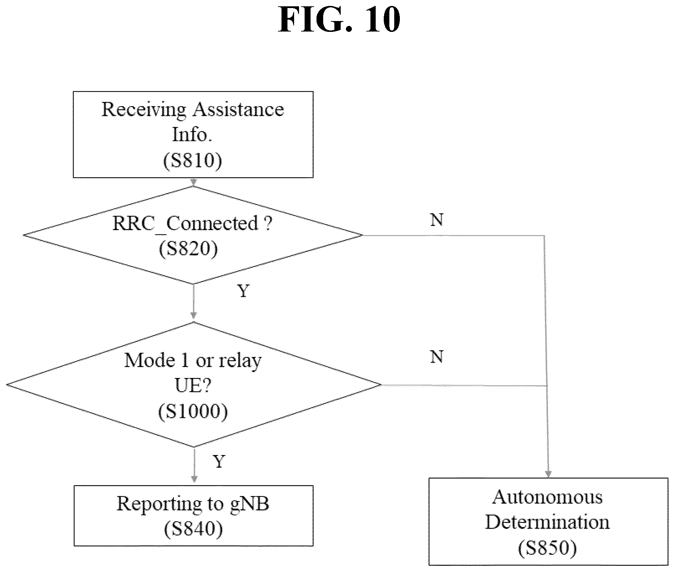

FIG. 10 illustrates the method according to the embodiment described with reference to FIG. 9, which is applied to the operation method of FIG. 8.

The operations of steps S810, S820, S840, and S850 illustrated in FIG. 10 may operate in the same manner as in FIG. 8. However, in the embodiment of FIG. 10, since the UE that receives assistance information from a peer UE reports the assistance information to the gNB regardless of a resource allocation mode, it is intended that step S830 of FIG. 8 for determining the resource allocation mode be improved.

That is, when the UE that has received the assistance information from the peer UE is in an RRC_Connected state, the UE may determine whether the UE is operating in mode 1 or operating as a relay UE (S1000). If the UE operates as the relay UE, the UE reports the received assistance information of the peer UE to the gNB even if the UE is operating in mode 2 as described above (S840) according to the proposed method.

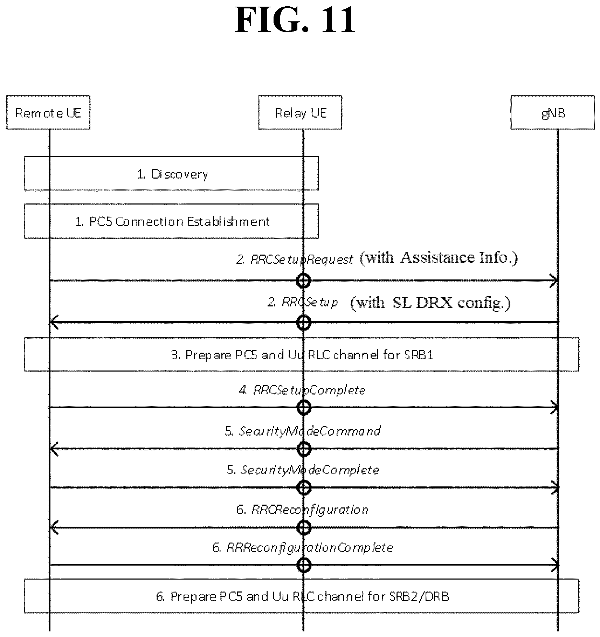

FIG. 11 is a diagram illustrating a method of performing an RRC configuration according to the embodiment described above with reference to FIG. 9.

Unlike the case in which the U2N relay UE serving as the Tx UE differently determines, according to a mode thereof, whether to report the received assistance information to the gNB or to autonomously determine the DRX configuration, if it is regulated that the U2N relay UE report the configuration to the gNB regardless of mode thereof, there is an additional advantage of using the assistance information received from the remote UE in combination with various procedures.

FIG. 11 illustrates a process of performing an RRC configuration in a U2N relay situation.

In step 1, a U2N remote UE and a U2N relay UE may perform a discovery procedure and establish PC5 RRC connection based on the discovery procedure.

In step 2, the remote UE may transmit an RRC setup request message (referred to as RRCReestablishmentRequest or RRCResumeRequest) to a gNB through the relay UE which is PC5-RRC-connected to the remote UE. This embodiment proposes transmitting the RRC setup request message including the assistance information for determining the above-described SL DRX configuration.

In step 3, PC5 and Uu RLC channels for SRB1 may be prepared.

In step 4, the gNB may transmit an RRC Setup Complete message to the remote UE through the relay UE based on the information received in step 2. In this case, the gNB may configure SL DRX with reference to the assistance information received from the remote UE. In this case, the SL DRX configuration information may be transmitted by being included in an RRCSetup (referred to as RRCReestablishment or RRCResume) message for the remote UE.

In addition, the remote UE may inform even the relay UE of the SL DRX configuration allocated to the remote UE through an RRCReconfiguration message. This serves to cause the relay UE to transmit a message received from the gNB in alignment with an active time of the remote UE. That is, in a UL operation, SL DRX of the remote UE may be configured by the gNB. SL DRX may be included in a message for existing RRC connection establishment or may be configured through a separate RRC message.

Next, in step 5, a configuration related to a security mode may be performed, and in step 6, an RRC reconfiguration procedure for SRB2/DRB may be performed in a U2N relay situation.

On the other hand, another embodiment of the present disclosure proposes that an SL DRX configuration for the relay UE or an SL DRX configuration to be used by the remote UE after the remote UE is connected to the relay UE be included in an RRCReconfiguration message indicating path switching (/handover (HO)) transmitted to the remote UE during direct-to-indirect path switching (/HO).

The relay UE prepared for path switching (/HO) with the remote UE may receive an SL DRX configuration for the remote UE and an SL DRX configuration to be used by the relay UE from a serving gNB thereof.

### Examples of communication systems applicable to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

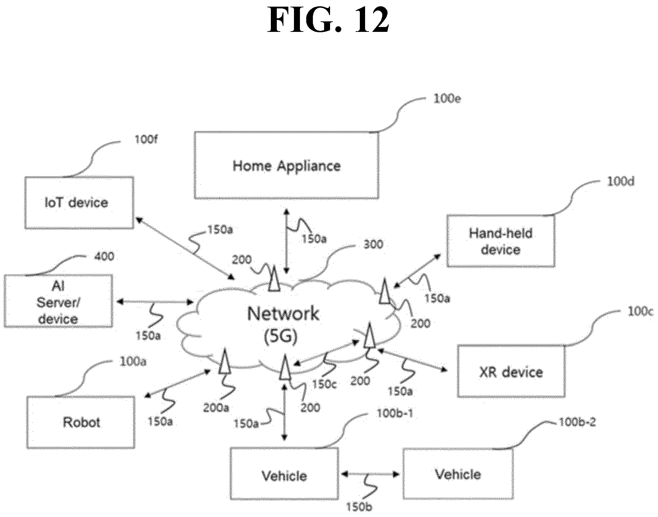

FIG. 12 illustrates a communication system 1 applied to the present disclosure.

Referring to FIG. 12, a communication system 1 applied to the present disclosure includes wireless devices, BSs, and a network. Herein, the wireless devices represent devices performing communication using RAT (e.g., 5G NR or LTE) and may be referred to as communication/radio/SG devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices applicable to the present disclosure

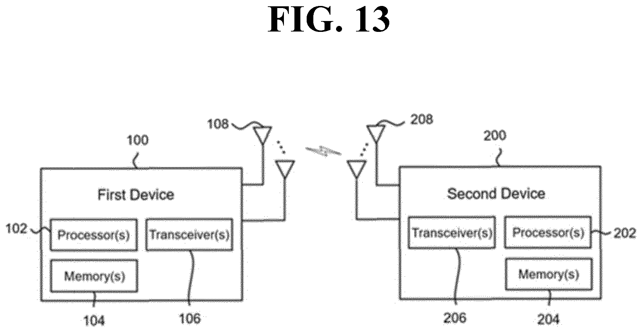

FIG. 13 illustrates wireless devices applicable to the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x}.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of a vehicle or an autonomous driving vehicle applicable to the present disclosure

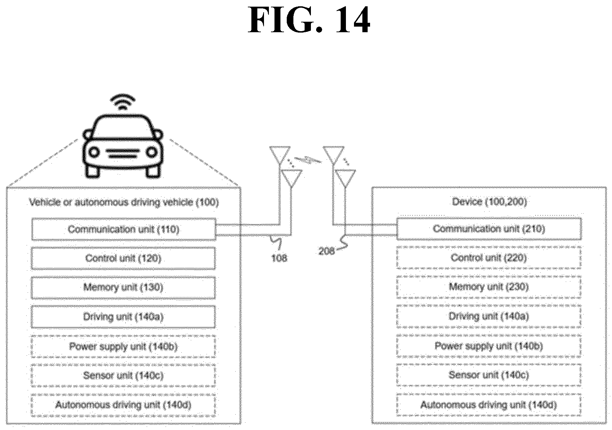

FIG. 14 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 14, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 43, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

### Examples of a vehicle and AR/VR applicable to the present disclosure

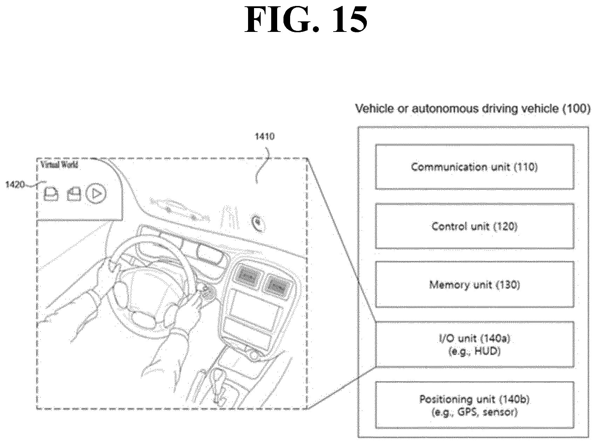

FIG. 15 illustrates a vehicle applied to the present disclosure. The vehicle may be implemented as a transport means, an aerial vehicle, a ship, etc.

Referring to FIG. 15, a vehicle 100 may include a communication unit 110, a control unit 120, a memory unit 130, an I/O unit 140a, and a positioning unit 140b. Herein, the blocks 110 to 130/140a and 140b correspond to blocks 110 to 130/140.

The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

### Examples of a robot applicable to the present disclosure

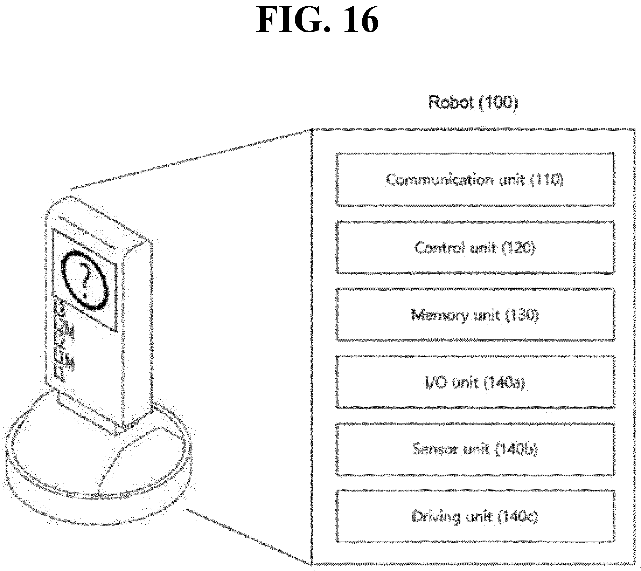

FIG. 16 illustrates a robot applied to the present disclosure. The robot may be categorized into an industrial robot, a medical robot, a household robot, a military robot, etc., according to a used purpose or field.

Referring to FIG. 16, a robot 100 may include a communication unit 110, a control unit 120, a memory unit 130, an I/O unit 140a, a sensor unit 140b, and a driving unit 140c. Herein, the blocks 110 to 130/140a to 140c correspond to the blocks 110 to 130/140 of FIG. 14, respectively.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

### Example of AI device to which the present disclosure is applied

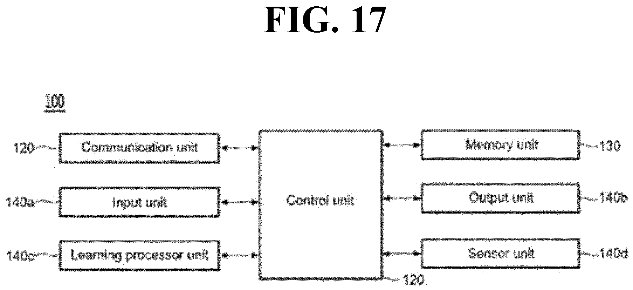

FIG. 17 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 17, an AI device 100 may include a communication unit 110, a control unit 120, a memory unit 130, an I/O unit 140a/140b, a learning processor unit 140c, and a sensor unit 140d. The blocks 110 to 130/140a to 140d correspond to blocks 110 to 130/140, respectively.

The communication unit 110 may transmit and receive wired/radio signals (e.g., sensor information, user input, learning models, or control signals) to and from external devices such as other AI devices (e.g., 100x, 200, or 400 of FIG. 13) or an AI server (e.g., 400 of FIG. 13) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 13). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 13). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

The above-described embodiments of the present disclosure are applicable to various mobile communication systems.

## Claims

1. A method of relaying, by a first user equipment, UE, (100a-f; 710) sidelink communication (150b) between a base station, BS, (200) and a second UE (100a-f; 720) in a wireless communication system, the method comprising:
receiving (S910) assistance information for determining a sidelink discontinuous reception, DRX, configuration from the second UE (100a-f; 720);
transmitting (S920) the assistance information to the BS (200) regardless of a resource allocation mode of the first UE (100a-f; 710);
receiving (S930) Uu link DRX configuration information and sidelink DRX configuration information from the BS (200); and
transmitting (S940) the sidelink DRX configuration information to the second UE (100a-f; 720).

2. The method of claim 1,
wherein the first UE (100a-f; 710) causes the BS (200) to determine the sidelink DRX information of the first UE (100a-f; 710) even based on the first UE (100a-f; 710) operating in resource allocation mode 2.

3. The method of claim 1 or 2,
wherein the Uu link DRX configuration information includes DRX configuration information for the first UE (100a-f; 710), and
the sidelink DRX configuration information includes DRX configuration information for the second UE (100a-f; 720).

4. The method of claim 3, wherein the sidelink DRX configuration information further includes DRX configuration information for the first UE (100a-f; 710).

5. The method of any one of claims 1 to 4,
wherein the assistance information for determining the sidelink DRX configuration is received (S910) in a process of receiving a request message for radio resource control, RRC, connection with the BS (200) from the second UE (100a-f; 720) by being included in the request message.

6. The method of any one of claims 1 to 5, further comprising
receiving, by the second UE (100a-f; 720), a sidelink relay path switching message from a fourth UE (100a-f),
wherein the sidelink relay switching message includes sidelink DRX configuration information of the fourth UE (100a-f) and sidelink DRX configuration information of the second UE (100a-f; 720).

7. A method of relaying sidelink communication (150b) by a first user equipment, UE, (100a-f; 710) in a wireless communication system, the method comprising:
based on the first UE (100a-f; 710) being (S820) in a radio resource control, RRC, _Connected state and on reception (S810) of first assistance information for determining a sidelink discontinuous reception, DRX, configuration from a second UE (100a-f; 720) while the first UE (100a-f; 710) operates in a sidelink resource allocation mode 1 or operates as a relay UE,
reporting (S840) the first assistance information to a base station, BS, (200),
receiving Uu link DRX configuration information and sidelink DRX configuration information from the BS (200),
transmitting the sidelink DRX configuration information to the second UE (100a-f; 720); and
based on the first UE (100a-f; 710) being in an RRC_IDLE state or an RRC_INACTIVE state and on reception of second assistance information for determining the sidelink DRX configuration from a third UE (100a-f) while the first UE (100a-f; 710) operates in a sidelink resource allocation mode 2,
determining (S850), by the first UE (100a-f; 710), the sidelink DRX configuration for the third UE, and
transmitting the sidelink DRX configuration to the third UE (100a-f).

8. A first user equipment, UE, (100a-f; 710) for relaying sidelink communication between (150b) a second UE (100a-f; 720) and a base station, BS, (200) in a wireless communication system, the first UE (100a-f; 710) comprising:
at least one processor (102); and
at least one computer memory (104) operably connected to the at least one processor (102) and configured to store instructions causing, when executed, the at least one processor (102) to perform operations,
wherein the operations comprise:
receiving (S910) assistance information for determining a sidelink discontinuous reception, DRX, configuration from the second UE (100a-f; 720);
transmitting (S920) the assistance information to the BS (200) regardless of a resource allocation mode of the first UE (100a-f; 710);
receiving (S930) Uu link DRX configuration information and sidelink DRX configuration information from the BS (200); and
transmitting (S940) the sidelink DRX configuration information to the second UE (100a-f; 720).

9. A processor (102) for performing operations for a first user equipment, UE, (100a-f; 710) relaying sidelink communication (150b) between a second UE (100a-f; 720) and a base station, BS, (200) in a wireless communication system, the operations comprising:
receiving (S910) assistance information for determining a sidelink discontinuous reception, DRX, configuration from the second UE (100a-f; 720);
transmitting (S920) the assistance information to the BS (200) regardless of a resource allocation mode of the first UE (100a-f; 710);
receiving (S930) Uu link DRX configuration information and sidelink DRX configuration information from the BS (200); and
transmitting (S940) the sidelink DRX configuration information to the second UE (100a-f; 720).

10. A non-volatile computer readable storage medium storing at least one computer program including instructions that, when executed by at least one processor (102), cause the at least one processor (102) to perform operations for a first user equipment, UE, (100a-f; 710) relaying sidelink communication (150b) between a second UE (100a-f; 720) and a base station, BS, (200) the operations comprising:
receiving (S910) assistance information for determining a sidelink discontinuous reception, DRX, configuration from the second UE (100a-f; 720);
transmitting (S920) the assistance information to the BS (200) regardless of a resource allocation mode of the first UE (100a-f; 710);
receiving Uu link DRX configuration information and sidelink DRX configuration information from the BS (200); and
transmitting (S940) the sidelink DRX configuration information to the second UE (100a-f; 720).

## Patentansprüche

1. Verfahren zur Weiterleitung von Sidelink-Kommunikation (150b) zwischen einer Basisstation, BS, (200) und einem zweiten UE (100a-f; 720) in einem drahtlosen Kommunikationssystem durch ein erstes Benutzergerät, UE, (100a-f; 710), wobei das Verfahren umfasst:
Empfangen (S910) von Unterstützungsinformationen zum Bestimmen einer Konfiguration eines diskontinuierlichen Nebenstreckenempfangs, DRX, von dem zweiten UE (100a-f; 720);
Übertragen (S920) der Unterstützungsinformationen an die BS (200) unabhängig von einem Ressourcenzuweisungsmodus des ersten UE (100a-f; 710);
Empfangen (S930) von Uu-Link-DRX-Konfigurationsinformationen und Sidelink-DRX-Konfigurationsinformationen von der BS (200); und
Übertragen (S940) der Sidelink-DRX-Konfigurationsinformationen an das zweite UE (100a-f; 720).

2. Das Verfahren nach Anspruch 1,
wobei das erste UE (100a-f; 710) die BS (200) veranlasst, die Sidelink-DRX-Informationen des ersten UE (100a-f; 710) auch auf der Grundlage des ersten UE (100a-f; 710) zu bestimmen, das im Ressourcenzuweisungsmodus 2 arbeitet.

3. Das Verfahren nach Anspruch 1 oder 2,
wobei die Uu-Link-DRX-Konfigurationsinformationen DRX-Konfigurationsinformationen für das erste UE (100a-f; 710) enthalten, und
die Sidelink-DRX-Konfigurationsinformationen DRX-
Konfigurationsinformationen für das zweite UE (100a-f; 720) enthalten.

4. Verfahren nach Anspruch 3, wobei die Sidelink-DRX-Konfigurationsinformationen ferner DRX-Konfigurationsinformationen für das erste UE (100a-f; 710) enthalten.

5. Das Verfahren nach einem der Ansprüche 1 bis 4,
wobei die Unterstützungsinformation zum Bestimmen der Sidelink-DRX-Konfiguration in einem Prozess eines Empfangens einer Anforderungsnachricht für eine Radio Resource Control, RRC, -Verbindung mit der BS (200) von dem zweiten UE (100a-f; 720) empfangen wird (S910), indem sie in der Anforderungsnachricht enthalten ist.

6. Das Verfahren nach einem der Ansprüche 1 bis 5, das ferner umfasst Empfangen einer Sidelink-Relaispfad-Umschaltnachricht von einem vierten UE (100a-f) durch das zweite UE (100a-f; 720),
wobei die Sidelink-Relaisschaltnachricht Sidelink-DRX-
Konfigurationsinformationen des vierten UE (100a-f) und Sidelink-DRX-Konfigurationsinformationen des zweiten UE (100a-f; 720) enthält.

7. Ein Verfahren zur Weiterleitung von Sidelink-Kommunikation (150b) durch ein erstes Benutzergerät, UE, (100a-f; 710) in einem drahtlosen Kommunikationssystem, wobei das Verfahren umfasst:
basierend darauf, dass sich das erste UE (100a-f; 710) in einem Radio Resource Control, RRC, _Connected-Zustand befindet (S820), und auf dem Empfang (S810) von ersten Unterstützungsinformation zum Bestimmen einer Sidelink Discontinuous Reception, DRX, -Konfiguration von einem zweiten UE (100a-f; 720), während das erste UE (100a-f; 710) in einem Sidelink-Ressourcenzuweisungsmodus 1 arbeitet oder als ein Relais-UE arbeitet,
Melden (S840) der ersten Unterstützungsinformationen an eine Basisstation BS (200),
Empfangen von Uu-Link-DRX-Konfigurationsinformationen und Sidelink-DRX-Konfigurationsinformationen von der BS (200),
Übertragen der Sidelink-DRX-Konfigurationsinformationen an das zweite UE (100a-f; 720); und
basierend auf dem ersten UE (100a-f; 710), das sich in einem RRC_IDLE-Zustand oder einem RRC_INACTIVE-Zustand befindet, und auf einem Empfang von zweiten Unterstützungsinformationen zur Bestimmung der Sidelink-DRX-Konfiguration von einem dritten UE (100a-f), während das erste UE (100a-f; 710) in einem Sidelink-Ressourcenzuweisungsmodus 2 arbeitet,
Bestimmen (S850), durch das erste UE (100a-f; 710), der Sidelink-DRX-Konfiguration für das dritte UE, und
Übertragen der Sidelink-DRX-Konfiguration an das dritte UE (100a-f).

8. Ein erstes Benutzergerät, UE, (100a-f; 710) zum Weiterleiten von Sidelink-Kommunikation zwischen (150b) einem zweiten UE (100a-f; 720) und einer Basisstation, BS, (200) in einem drahtlosen Kommunikationssystem, wobei das erste UE (100a-f; 710) umfasst:
mindestens einen Prozessor (102); und
mindestens einen Computerspeicher (104), der funktionsfähig mit dem mindestens einen Prozessor (102) verbunden und so konfiguriert ist, dass er Befehle speichert, die, wenn sie ausgeführt werden, den mindestens einen Prozessor (102) veranlassen, Operationen durchzuführen,
wobei die Vorgänge umfassen:
Empfangen (S910) von Unterstützungsinformationen zum Bestimmen einer Konfiguration eines diskontinuierlichen Nebenstreckenempfangs, DRX, von dem zweiten UE (100a-f; 720);
Übertragen (S920) der Unterstützungsinformationen an die BS (200) unabhängig von einem Ressourcenzuweisungsmodus des ersten UE (100a-f; 710);
Empfangen (S930) von Uu-Link-DRX-Konfigurationsinformationen und Sidelink-DRX-Konfigurationsinformationen von der BS (200); und
Übertragen (S940) der Sidelink-DRX-Konfigurationsinformationen an das zweite UE (100a-f; 720).

9. Ein Prozessor (102) zum Durchführen von Operationen für ein erstes Benutzergerät, UE, (100a-f; 710), das Sidelink-Kommunikation (150b) zwischen einem zweiten UE (100a-f; 720) und einer Basisstation, BS, (200) in einem drahtlosen Kommunikationssystem weiterleitet, wobei die Operationen umfassen:
Empfangen (S910) von Unterstützungsinformationen zum Bestimmen einer Konfiguration eines diskontinuierlichen Nebenstreckenempfangs, DRX, von dem zweiten UE (100a-f; 720);
Übertragen (S920) der Unterstützungsinformationen an die BS (200) unabhängig von einem Ressourcenzuweisungsmodus des ersten UE (100a-f; 710);
Empfangen (S930) von Uu-Link-DRX-Konfigurationsinformationen und Sidelink-DRX-Konfigurationsinformationen von der BS (200); und
Übertragen (S940) der Sidelink-DRX-Konfigurationsinformationen an das zweite UE (100a-f; 720).

10. Nichtflüchtiges, computerlesbares Speichermedium, das mindestens ein Computerprogramm speichert, das Anweisungen enthält, die, wenn sie von mindestens einem Prozessor (102) ausgeführt werden, den mindestens einen Prozessor (102) veranlassen, Operationen für ein erstes Benutzergerät, UE, (100a-f; 710) durchzuführen, das Sidelink-Kommunikation (150b) zwischen einem zweiten UE (100a-f; 720) und einer Basisstation, BS, (200) weiterleitet, wobei die Operationen umfassen:
Empfangen (S910) von Unterstützungsinformationen zum Bestimmen einer Konfiguration eines diskontinuierlichen Nebenstreckenempfangs, DRX, von dem zweiten UE (100a-f; 720);
Übertragen (S920) der Unterstützungsinformationen an die BS (200) unabhängig von einem Ressourcenzuweisungsmodus des ersten UE (100a-f; 710);
Empfangen von Uu-Link-DRX-Konfigurationsinformationen und Sidelink-DRX-Konfigurationsinformationen von der BS (200); und
Übertragen (S940) der Sidelink-DRX-Konfigurationsinformationen an das zweite UE (100a-f; 720).

## Revendications

1. Procédé permettant de relayer, par un premier équipement utilisateur (100a-f; 710), une communication en liaison latérale (150b) entre une station de base (200) et un second UE (100a-f; 720) dans un système de communication sans fil, le procédé comprenant:
la réception (S910) d'informations d'assistance pour déterminer une configuration de réception discontinue de liaison latérale (DRX), en provenance du second UE (100a-f; 720);
la transmission (S920) des informations d'assistance à la station de base (200) quel que soit le mode d'attribution des ressources du premier utilisateur (100a-f; 710);
la réception (S930) d'informations de configuration DRX de liaison Uu et d'informations de configuration DRX de liaison latérale, en provenance de la station de base (200); et
la transmission (S940) des informations de configuration DRX de liaison latérale au second UE (100a-f; 720).

2. Procédé selon la revendication 1,
dans lequel le premier UE (100a-f; 710) amène la BS (200) à déterminer les informations DRX de liaison latérale du premier UE (100a-f; 710) même si le premier UE (100a-f; 710) est en mode d'attribution de ressources 2.

3. Procédé selon la revendication 1 ou 2,
dans lequel les informations de configuration DRX de liaison Uu comprennent des informations de configuration DRX pour le premier UE (100a-f; 710), et
les informations de configuration DRX de liaison latérale comprennent des informations de configuration DRX pour le second UE (100a-f; 720).

4. Procédé selon la revendication 3, dans lequel les informations de configuration DRX de liaison latérale comprennent en outre des informations de configuration DRX pour le premier UE (100a-f; 710).

5. Procédé selon l'une quelconque des revendications 1 à 4,
dans lequel les informations d'assistance pour la détermination de la configuration DRX de liaison latérale sont reçues (S910) dans le cadre d'un processus de réception d'un message de demande de connexion pour la gestion des ressources radio, RRC, avec la station de base (200) en provenance du second UE (100a-f; 720), celles-ci étant incluses dans le message de demande.

6. Procédé selon l'une quelconque des revendications 1 à 5, comprenant en outre
la réception, par le deuxième UE (100a-f; 720), d'un message de commutation de chemin de relais de liaison latérale provenant d'un quatrième UE (100a-f),
dans lequel le message de commutation de relais de liaison latérale comprend des informations de configuration DRX de liaison latérale du quatrième UE (100a-f) et des informations de configuration DRX de liaison latérale du deuxième UE (100a-f; 720).

7. Procédé permettant de relayer une communication en liaison latérale (150b) par un équipement utilisateur, UE, (100a-f; 710) dans un système de communication sans fil, le procédé comprenant:
étant donné que le premier UE (100a-f; 710) est (S820) en mode connecté pour la gestion des ressources radio, RRC, et apte à la réception (S810) de premières informations d'assistance pour déterminer une configuration de réception discontinue de liaison latérale, DRX, en provenance d'un deuxième UE (100a-f; 720) alors que le premier UE (100a-f; 710) fonctionne dans un mode d'attribution de ressources de liaison latérale 1 ou fonctionne en tant qu'UE de relais,
la communication (S840) des premières informations d'assistance à une station de base (BS) (200),
la réception en provenance de la station de base (200) des informations de configuration DRX de liaison Uu et des informations de configuration DRX de liaison latérale,
la transmission des informations de configuration DRX de liaison latérale au deuxième UE (100a-f; 720); et
étant donné que le premier UE (100a-f; 710) est en mode (S820) en mode RRC_IDLE ou RRC_INACTIVE et apte à la réception de secondes informations d'assistance pour déterminer la configuration DRX de liaison latérale, en provenance d'un troisième UE (100a-f;) alors que le premier UE (100a-f; 710) fonctionne dans un mode d'attribution de ressources de liaison latérale 2,
la détermination (S850), par le premier UE (100a-f; 710), de la configuration DRX de liaison latérale pour le troisième UE, et
la transmission de la configuration DRX de liaison latérale au troisième UE (100a-f).

8. Premier équipement utilisateur, UE, (100a-f; 710) pour relayer une communication de liaison latérale entre (150b) un deuxième UE (100a- ; 720) et une station de base, BS, (200) dans un système de communication sans fil, le premier UE (100a-f; 710) comprenant:
au moins un processeur (102); et
au moins une mémoire d'ordinateur (104) connectée fonctionnellement à l'au moins un processeur (102) et configurée pour stocker des instructions qui, lorsqu'elles sont exécutées, amènent l'au moins un processeur (102) à effectuer les opérations,
dans lequel les opérations comprennent:
la réception (S910) d'informations d'assistance pour déterminer une configuration de réception discontinue de liaison latérale (DRX), en provenance du second UE (100a-f; 720);
la transmission (S920) des informations d'assistance à la station de base (200) quel que soit le mode d'attribution des ressources du premier utilisateur (100a-f; 710);
la réception (S930) d'informations de configuration DRX de liaison Uu et d'informations de configuration DRX de liaison latérale, en provenance de la station de base (200); et
la transmission (S940) des informations de configuration DRX de liaison latérale au second UE (100a-f; 720).

9. Processeur (102) destiné à réaliser des opération pour un premier équipement utilisateur, UE, (100a-f; 710), relayant une communication en liaison latérale (150b) entre un deuxième UE (100a-f; 200) et une station de base, BS, (200) dans un système de communication sans fil, les opérations comprenant:
la réception (S910) d'informations d'assistance pour déterminer une configuration de réception discontinue de liaison latérale (DRX), en provenance du second UE (100a-f; 720);
la transmission (S920) des informations d'assistance à la station de base (200) quel que soit le mode d'attribution des ressources du premier utilisateur (100a-f; 710);
la réception (S930) d'informations de configuration DRX de liaison Uu et d'informations de configuration DRX de liaison latérale, en provenance de la station de base (200); et
la transmission (S940) des informations de configuration DRX de liaison latérale au second UE (100a-f; 720).

10. Support d'enregistrement lisible par ordinateur non volatil stockant au moins un programme informatique comprenant des instructions qui, lorsqu'elles sont exécutées par au moins un processeur (102), amènent l'au moins un processeur (102) à réaliser des opérations pour un équipement utilisateur, UE, (100a-f; 710) relayant la communication en liaison latérale (150b) entre un second UE (100a-f; 720) et une station de base, BS, (200), les opérations comprenant:
la réception (S910) d'informations d'assistance pour déterminer une configuration de réception discontinue de liaison latérale (DRX), en provenance du second UE (100a-f; 720);
la transmission (S920) des informations d'assistance à la station de base (200) quel que soit le mode d'attribution des ressources du premier utilisateur (100a-f; 710);
la réception en provenance de la station de base (200) des informations de configuration DRX de liaison Uu et des informations de configuration DRX de liaison latérale; et
la transmission (S940) des informations de configuration DRX de liaison latérale au second UE (100a-f; 720).
